## Europäisches Patentamt
## European Patent Office
## Office européen des brevets

(11) Veröffentlichungsnummer: **0 207 180**
B1

(12) **EUROPÄISCHE PATENTSCHRIFT**

(45) Veröffentlichungstag der Patentschrift:
**09.03.88**

(51) Int. Cl.⁴: **H 04 N 11/18**

(21) Anmeldenummer: **85108094.5**

(22) Anmeldetag: **29.06.85**

(54) **Digitale SECAM-Farbträger-Filterschaltung.**

(43) Veröffentlichungstag der Anmeldung:
**07.01.87 Patentblatt 87/2**

(45) Bekanntmachung des Hinweises auf die Patenterteilung:
**09.03.88 Patentblatt 88/10**

(84) Benannte Vertragsstaaten:
**DE FR NL**

(56) Entgegenhaltungen:
**DE - A - 2 819 730**
**DE - B - 1 288 120**

(73) Patentinhaber: **Deutsche ITT Industries GmbH,
Hans-Bunte-Strasse 19 Postfach 840, D-7800 Freiburg
(DE)**

(72) Erfinder: **Ehret, Bernhard, Dipl.-Ing., Im Glaser 25,
D-7800 Freiburg i.Br. (DE)**

(74) Vertreter: **Morstadt, Volker, Dipl.-Ing., c/o Deutsche ITT
Industries GmbH Patent/Lizenzabteilung
Postfach 840 Hans-Bunte-Strasse 19,
D-7800 Freiburg/Brsg. (DE)**

## Beschreibung

Die Erfindung betrifft eine digitale SECAM-Farbträger-Filterschaltung mit Signalumschaltung für das digitalisierte Farb-Bild-Austast-Synchron-Signalgemisch (= FBAS-Signal) von entsprechenden Farbfernsehempfängern, vgl. den Oberbegriff des Anspruchs 1.

Eine derartige Filterschaltung ist im INTERMTE-TALL-Datenbuch, «Digit 2000 VLSI Digital TV System», Ausgabe 1984/10, Seiten 175 bis 183, insbesondere Abschnitte 11.1, 11.1.3 und 11.1.8 und die zugehörigen Figuren 11-1, 11-2 und 11-3 beschrieben. Dieser Stand der Technik beschäftigt sich mit der digitalen Verarbeitung von digitalisierten SECAM-FBAS-Signalen mit Filterschaltungen, die das Farbsignal vom Helligkeitssignal trennen. Beim SECAM-Verfahren erfolgt diese Trennung durch einen speziellen Bandpass, das Bellfilter, dessen Mittenfrequenz bei 4,286 MHz liegt und dessen Frequenzcharakteristik möglichst genau invers zu der entsprechenden senderseitigen Antibell-Farbhilfsträgerabsenkung ist.

Die digitale Schaltung des Bellfilters enthält rekursive Filterstufen, die sehr empfindlich auf eingangsseitige Gleichspannungssprünge reagieren. Diese sind im FBAS-Signal während der Dunkeltastzeit enthalten, wie es z.B. die Vertikal- und Horizontalsynchronimpuls sind. Die dadurch bedingten Störungen bei der Abtrennung des frequenzmodulierten SECAM-Farbträgersignals klingen nur langsam ab und können so zu Beginn der einzelnen Zeilen noch auf dem Bildschirm sichtbar sein.

Der in den Ansprüchen gekennzeichneten Erfindung liegt daher die Aufgabe zugrunde, die Filterschaltung nach dem Oberbegriff des Anspruchs 1 so zu optimieren und auszugestalten, dass die durch die Gleichspannungssprünge verursachten Störungen beseitigt sind oder die Einschwingvorgänge zumindest in so kurzer Zeit abklingen, dass sie nicht mehr auf dem Bildschirm sichtbar sind.

Die Erfindung wird nun anhand der Figuren der Zeichnung näher erläutert.

Fig. 1 zeigt das Prinzipschaltbild einer Ausführungsform der digitalen SECAM-Farbträger-Filterschaltung nach der Erfindung.

Fig. 2 zeigt schematisch einen typischen zeitlichen Verlauf zugehöriger Signale, und

Fig. 3 zeigt das Prinzipschaltbild einer einfachen Ausführungsform des in Fig. 1 vorhandenen digitalen Sinusgenerators.

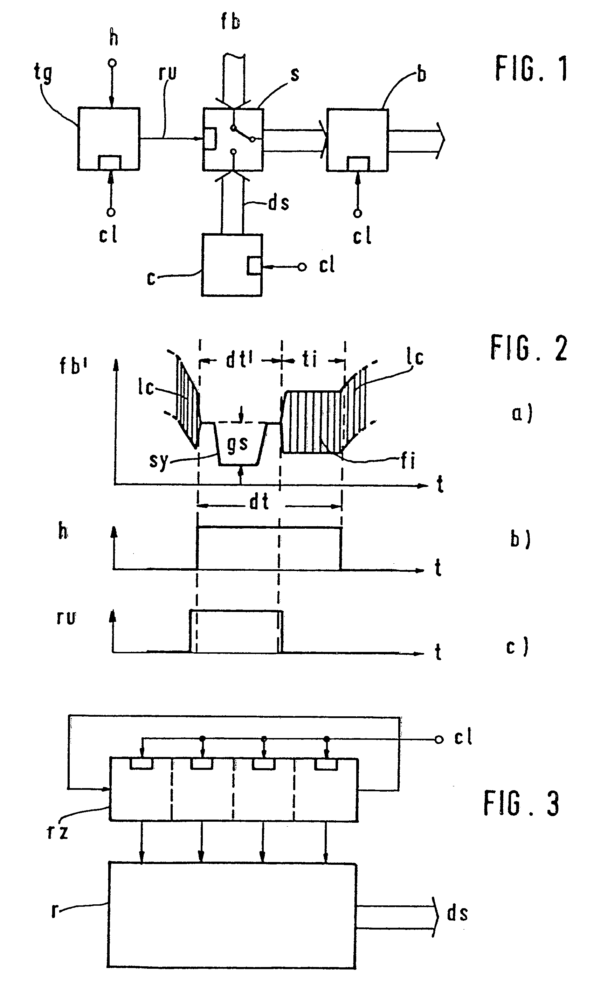

In Fig. 1 ist das Bellfilter b eingangsseitig mit dem Ausgang des Datenumschalters s verbunden. Dieser ist nicht mit dem bei digitalen SECAM-Farbfernsehempfängern üblichen Datenumschalter identisch, der sequentiell das je Zeile gespeicherte Farbsignal umschaltet. Der erste Eingang des Datenumschalters s ist mit dem digitalisierten FBAS-Signal fb und der zweite Eingang ist mit dem digitalen Sinussignal ds gespeist. Die Samplingfrequenz dieser Signale ist die vierfache Bellfiltermittenfrequenz, also 17,144 MHz.

Der Steuereingang des Datenumschalters s ist mit dem Torimpuls ru gespeist, der das Ausgangssignal des Torimpulsgenerators tg ist. Diesem sind der während der Zeilendunkeltastung im Farbfernsehgerät erzeugte Zeilenaustastimpuls h und der Systemtakt cl zugeführt. Der Torimpulsgenerator tg enthält Zähler und logische Verknüpfungsglieder, die in rein fachmännischer Weise so angeordnet sind, dass der Torimpuls ru während desjenigen Teils dt' des Dunkeltastintervalls dt einer Bildzeile, in dem keine Farbträgerkennungssignale fi gesendet werden, und während mindestens der Zeit, in der das analoge FBAS-Signal fb' nicht vom Bildinhalt bedingte Gleichspannungssprünge gs enthält, entsteht.

In Fig. 2a ist schematisch zur Erläuterung der eben erwähnten Zeitabschnitte das dem digitalen FBAS-Signal fb zugrundeliegende analoge FBAS-Signal fb' dargestellt. Es enthält bildabhängige Farb-Helligkeits-Signale lc, den Zeilensynchronimpuls sy und das Farbträgerkennungssignal fi auf der hinteren Schwarzschulter.

Der Zeilenaustastimpuls h (siehe Fig. 2b), der während des Zeilendunkeltastintervalls dt auftritt, kann z.B. aus der Ablenkeinheit abgeleitet sein und überdeckt auch die Zeitdauer ti des Farbhilfsträgerkennungssignals fi.

Die Vorderflanke des Torimpulses ru soll im allgemeinen mit der des Zeilenaustastimpulses h zusammenfallen, kann aber auch, wie in Fig. 2c gezeigt, etwas vorauseilen. Die Rückflanke des Torimpulses ru soll im allgemeinen mit dem Beginn des Farbhilfsträgerkennungssignals fi zusammenfallen, kann ihm, wie gezeigt, aber auch etwas nacheilen.

Das digitale Sinussignal ds ist in Fig. 1 das Ausgangssignal des digitalen Sinusgenerators c, dessen Takteingang ebenso wie der Takteingang des Bellfilters b mit dem Systemtakt cl gespeist ist, dessen Frequenz die vierfache Bellfiltermittenfrequenz ist. Das Ausgangssignal des Bellfilters b ist weiteren, hier nicht näher beschriebenen Schaltungsteilen zur Demodulation und zur Trennung der einzelnen Farbkomponenten zugeleitet.

In Fig. 3 ist eine einfache Ausführungsform des digitalen Sinusgenerators c gezeigt, wie er in der Ausführungsform von Fig. 1 verwendet werden kann. Der vierstufige Ringzähler rz ist mit dem Systemtakt cl getaktet. Die Ausgänge der vier Ringzählerstufen sind mit den Adresseingängen des Speichers r verbunden. Darin sind vier jeweils um 90° versetzte digitale Werte der Sinusfunktion gespeichert. Diese vier Werte sind das digitale Sinussignal ds.

Die Lösung der gestellten Aufgabe erweist sich somit als sehr einfach und leicht integrierbar. Auch muss in die vorhandene Bellfilterstruktur nicht eingegriffen werden, was von grossem Vorteil ist.

Der Grundgedanke der Erfindung besteht darin, während der Zeit, in der die Störungen auftreten, das digitalisierte FBAS-Signal fb vom Eingang des Bellfilters b abzuschalten und statt dessen ein digitales Sinussignal ds mit der Bellfiltermittenfrequenz dem Eingang des Bellfilters b zuzuführen. Die Erzeugung der entsprechenden Torimpulse ru, während der die Signalumschaltung mit dem Datenumschalter s erfolgt, ist in derartigen digitalen Systemen mittels Zählern und logischen Verknüpfungsschaltungen leicht realisierbar.

Ganz besonders einfach ist die Realisierung des digitalen Sinusgenerators c mittels des Systemtakts cl, dessen Frequenz die vierfache Bellfiltermittenfrequenz ist und damit auch der vierfachen Farbträgermittenfrequenz entspricht. Somit stellen vier Impulse des Systemtakts cl einen Zyklus einer mittleren Farbträgerschwingung von 4,286 MHz dar und vier aufeinanderfolgende Impulse des Systemtakts cl markieren jeweils einen Quadranten der mittleren Farbträgerschwingung.

Im Speicher r sind hierzu entsprechend den vier Adressen vier um 90° versetzte Momentanwerte dieser mittleren Farbträgerschwingung gespeichert, wobei ihr Amplitudenwert der mittleren Farbträgeramplitude des im digitalen FBAS-Signal fb enthaltenen Farbträgerkennungssignals fi entsprechen soll. Diese digitalen Werte der Sinusfunktion werden nun entsprechend der Stellenzahl als das digitale Sinussignal ds dem Ausgang des Speichers r zugeleitet und über den Datenumschalter s dem Bellfilter b zugeführt.

Weitere Vereinfachungen des Speichers r ergeben sich, wenn das digitale Sinussignal ds aus den Nulldurchgängen sowie den Maximal- und Minimalwerten der Sinusfunktion besteht. Selbstverständlich kann der Ringzähler rz durch einen anderen Zähler mit entsprechend codiertem Ausgang ersetzt werden. Der Speicher r kann ein maskenprogrammierter Festwertspeicher (= ROM), dessen Speicherinhalt während der Herstellung oder während einer einmaligen Programmierung festgelegt ist, aber auch ein umprogrammierbarer Speicher (= EEPROM) sein. Eine Anpassung an unterschiedliche Amplitudenanforderungen des digitalen Sinussignals ds kann entweder durch einen während des Betriebs änderbaren Speicherinhalt oder durch einen nachgeschalteten Multiplizierer erfolgen, dessen Multiplikationsfaktor einstellbar ist und im einfachsten Fall einer Zweierpotenz entspricht.

Eine weitere Verbesserung ist dadurch möglich, dass der Torimpulsgenerator tg weitere Torimpulse erzeugt, die den Datenumschalter s steuern, und zwar im Bereich der Bilddunkeltastung während des Bildwechsels. Hier können sogar spezielle Torimpuls für spezielle Zeilen erzeugt werden, z.B. zur Auswertung des Halbbildkennungssignals. Dem Torimpulsgenerator tg wird hierzu als weiterer Steuerimpuls der einmal je Halbbild im Fernsehempfänger erzeugte Vertikalimpuls zugeführt.

## Patentansprüche

1. Digitale SECAM-Farbträger-Filterschaltung mit Signalumschaltung für das digitalisierte Farb-Bild-Austast-Synchron-Signalgemisch (= FBAS-Signal) von entsprechenden Farbfernsehempfängern

— mit einem Bandpass (= Bellfilter) (b), der das dem Helligkeitssignal überlagerte frequenzmodulierte und senderseitig in der Amplitude abgesenkte Farbträgersignal vom Helligkeitssignal trennt und wieder auf untereinander gleiche Amplitudenwerte bringt,

— mit einer Oszillatoranordnung, die einen Systemtakt (cl) erzeugt, dessen Frequenz gleich dem Vierfachen der Bellfilter-Mittenfrequenz ist und der mit den beiden Farbhilfsträgerkennungssignalen (fi) des digitalisierten FBAS-Signals (fb) verkoppelt ist, und

— mit einem Torimpulsgenerator (tg) für Torimpulse (ru), die einzelne charakteristischen Intervallen des digitalisierten FBAS-Signals (fb) bzw. des zugehörigen analogen FBAS-Signals (fb') entsprechen, gekennzeichnet durch folgende Merkmale:

— der Torimpulsgenerator (tg) erzeugt mindestens während desjenigen Teils (dt') des Dunkeltastintervalls (dt), in dem keine Farbhilfsträgerkennungssignale (fi) gesendet werden, den Torimpuls (ru),

— dieser ist dem Steuereingang eines elektronischen Datenumschalters (s) zugeführt, an dessen erstem Eingang das digitalisierte FBAS-Signal (fb) liegt,

— der Ausgang des Datenumschalters (s) speist den Eingang des Bellfilters (b), dessen Ausgangssignal weiteren Schaltungsteilen zugeführt ist, und

— der zweite Eingang des Datenumschalters (s) ist mit einem digitalen Sinussignal (ds) gespeist, das ein digitaler Sinusgenerator (c) mittels des Systemtakts (cl) erzeugt.

2. Digitale SECAM-Farbträger-Filterschaltung nach Anspruch 1, gekennzeichnet durch folgende Merkmale:

— der digitale Sinusgenerator (c) enthält einen vierstufigen Ringzähler (rz), dessen Takteingang der Systemtakt (cl) zugeführt ist, und

— der jeweilige Ausgang einer Stufe des Ringzählers (rz) ist mit dem jeweiligen Adresseingang eines Speichers (r) verbunden, in dem digitale Werte der Sinusfunktion für vier um jeweils 90° versetzte Momentanwerte gespeichert sind und dessen Ausgang das digitale Sinussignal (ds) liefert.

3. Digitale SECAM-Farbträger-Filterschaltung nach Anspruch 1 oder 2, dadurch gekennzeichnet, dass die Amplitude des digitalen Sinussignals (ds) der mittleren Amplitude des Farbträgerkennungssignals (fi) entspricht und der Speicher (r) ein maskenprogrammierter Festwertspeicher (= ROM) ist.

4. Digitale SECAM-Farbträger-Filterschaltung nach einem der Ansprüche 1 bis 3, dadurch gekennzeichnet, dass der Torimpulsgenerator (tg) unterschiedliche Torimpulse erzeugt, je nachdem, ob es sich um Bildzeilen, um Zeilen während des Bildwechsels oder um spezielle Zeilen innerhalb des Bildwechsels handelt.

## Claims

1. Digital SECAM chrominance subcarrier filter circuit with a signal switchover for the digitalized composite color (video) signal of corresponding color television receivers, comprising

— a band-pass filter (= bell filter) (b) which separates the frequency-modulated chrominance subcarrier signal as superimposed upon the luminance signal and lowered in its amplitude at the transmitting end, from the luminance signal and restores equal amplitude values between them,

— an oscillator stage which generates a system clock (cl) whose frequency is at four times the bell filter center frequency, and with said clock (cl) being coupled to the two chrominance subcarrier identification signals (fi) of said digitalized composite color (video) signal (fb), and

— a gate pulse generator (tg) for generating gate pulses (ru) which correspond to individual characteristic intervals of the digitalized composite color (video) signal (fb) or to the associated analog composite color (video) signal (fb') respectively, characterized by the following features:

— the gate pulse generator (tg) produces the gate pulse (ru) at least during that particular portion (dt') of the blanking interval (dt) in which no chrominance subcarrier identification signals (fi) are transmitted,

— said gate pulse (ru) is submitted to the control input of an electronic data switchover device (s) to the first input of which said digitalized composite color (video) signal (fb) is applied,

— the output of said data switchover device (s) supplies the input of said bell filter (b), with the output signal of the latter being fed to further circuit parts, and

— the second input of said data switchover device (s) is supplied with a digital sinusoidal signal (ds) which is produced by a digital sine-wave generator (c) with the aid of the system clock (cl).

2. A digital SECAM chrominance subcarrier filter circuit as claimed in Claim 1, characterized by the following features:

— the digital sine-wave generator (c) contains a four-stage ring counter (rz) to the clock input of which said system clock (cl) is fed, and

— the respective output of one stage of said ring counter (rz) is connected to the respective address input of a memory (r) in which digital values of the sine function relating to four momentary values each staggered by 90°, are stored, and with the output thereof supplying said digital sinusoidal signal (ds).

3. A digital SECAM chrominance subcarrier filter circuit as claimed in Claim 1 or 2, characterized in that the amplitude of said digital sinusoidal signal (ds) corresponds to the mean or average amplitude of said chrominance subcarrier identification signal (fi), and that said memory (r) is a mask-programmed read-only memory (= ROM).

4. A digital SECAM chrominance subcarrier filter circuit as claimed in one of Claims 1 to 3, characterized in that said gate pulse generator (tg) produces different gate pulses, quite depending on whether picture lines, lines during the picture repetition or special lines within the picture repetition are involved.

## Revendications

1. Filtre numérique de sous-porteuse couleur SECAM avec commutation des signaux pour le signal composé numérisé de synchronisation et de suppression de couleur et d'image (= signal SSCI) de récepteurs de télévision en couleurs correspondants, comprenant un passe-bande (= filtre en cloche) (b), qui sépare le signal de la sous-porteuse couleur superposé au signal de luminance, à modulation de fréquence et dont l'amplitude est abaissée du côté émetteur, du signal de luminance, et les ramène à des valeurs d'amplitude identiques entre eux, un agencement d'oscillateur qui produit une commande du système (cl), dont la fréquence est égale à quatre fois la fréquence moyenne du filtre en cloche et qui est couplée avec les deux signaux d'identification de la sous-porteuse couleur (fi) du signal SSCI numérique (fb), et un générateur d'impulsions de déclenchement (tg) pour les impulsions de déclenchement (ru) qui correspondent aux différents intervalles caractéristiques du signal SSCI numérique (fb) et du signal SSCI analogique correspondant (fb'), caractérisé en ce que le générateur d'impulsions de déclenchement (tg) produit, au moins pendant la partie (dt') de l'intervalle de suppression du faisceau (dt) durant lequel aucun signal d'identification de la sous-porteuse couleur (fi) n'est envoyé, l'impulsion de déclenchement (ru), en ce que cette impulsion est amenée à l'entrée de commande d'un commutateur de données électroniques (s) à la première entrée duquel est appliqué le signal SSCI numérique (fb), en ce que la sortie du commutateur de données (s) alimente l'entrée du filtre en cloche (b), dont le signal de sortie est amené à d'autres parties du circuit, et en ce que la deuxième entrée du commutateur de données (s) est alimentée par un signal sinusoïdal numérique (ds) qui est produit par un générateur numérique d'ondes sinusoïdales (c) au moyen de la commande du système (cl).

2. Filtre numérique de sous-porteuse couleur SECAM selon la revendication 1, caractérisé en ce que le générateur numérique d'ondes sinusoïdales (c) comprend un compteur annulaire à quatre étages (rz), dont l'entrée de commande est amenée à la commande du système (cl) et en ce que la sortie de chaque étage du compteur annulaire (rz) est reliée à une entrée d'adresse d'une mémoire (r) dans laquelle les valeurs numériques de la fonction sinusoïdale sont enregistrées pour quatre valeurs instantanées décalées de 90° les unes par rapport aux autres et dont la sortie fournit le signal sinusoïdal numérique (ds).

3. Filtre numérique de sous-porteuse couleur SECAM selon l'une quelconque des revendications 1 ou 2, caractérisé en ce que l'amplitude du signal sinusoïdal numérique (ds) correspond à l'amplitude moyenne du signal d'identification de la sous-porteuse couleur (fi) et en ce que la mémoire (r) est une mémoire morte (= ROM) programmable par masque.

4. Filtre numérique de sous-porteuse couleur SECAM selon l'une quelconque des revendications 1 à 3, caractérisé en ce que le générateur d'impulsions de déclenchement (tg) produit différentes impulsions de déclenchement selon qu'il s'agit de lignes d'image, de lignes pendant le changement d'image ou de lignes spéciales durant le changement d'image.

FIG. 1

FIG. 2

a)

b)

c)

FIG. 3